(19) Europäisches Patentamt
European Patent Office
Office européen des brevets

(11) **EP 4 026 217 B1**

(12) **FASCICULE DE BREVET EUROPEEN**

(45) Date de publication et mention de la délivrance du brevet:
**12.06.2024 Bulletin 2024/24**

(21) Numéro de dépôt: **20761291.2**

(22) Date de dépôt: **31.08.2020**

(51) Classification Internationale des Brevets (IPC):
*H02J 3/38* *(2006.01)* *H02J 3/00* *(2006.01)*
*H02J 7/35* *(2006.01)* *H02J 3/32* *(2006.01)*
*G06Q 10/063* *(2023.01)* *G06Q 50/06* *(2024.01)*
*G06Q 50/30* *(2012.01)*

(52) Classification Coopérative des Brevets (CPC):
**H02J 3/381;** G06Q 10/063; G06Q 50/06;
G06Q 50/40; H02J 3/003; H02J 3/004; H02J 3/32;
H02J 7/35; H02J 2203/10; H02J 2300/10;
H02J 2300/20; H02J 2300/24; H02J 2300/28;
Y02E 10/56; Y04S 10/50

(86) Numéro de dépôt international:
**PCT/EP2020/074212**

(87) Numéro de publication internationale:
**WO 2021/043714 (11.03.2021 Gazette 2021/10)**

(54) **PROCÉDÉ DE GESTION D'UN SYSTÈME HYBRIDE ET DISPOSITIF ASSOCIÉ**

VERFAHREN ZUR STEUERUNG EINES HYBRIDEN SYSTEMS UND ENTSPRECHENDE VORRICHTUNG

METHOD FOR CONTROLLING A HYBRID SYSTEM AND DEVICE THEREFOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2019 FR 1909622**

(43) Date de publication de la demande:
**13.07.2022 Bulletin 2022/28**

(73) Titulaire: **Commissariat à l'Energie Atomique et aux Energies Alternatives**
**75015 Paris (FR)**

(72) Inventeurs:
• **WANTIER, Audrey**
**38054 GRENOBLE CEDEX 09 (FR)**
• **BOURRY, Franck**
**38054 GRENOBLE CEDEX 09 (FR)**
• **DO, Thai-Phuong**
**38054 GRENOBLE CEDEX 09 (FR)**

(74) Mandataire: **Cabinet Camus Lebkiri**
**25 rue de Maubeuge**
**75009 Paris (FR)**

(56) Documents cités:
EP-A1- 3 255 594     CN-A- 107 769 258
FR-A1- 3 045 194     US-A1- 2014 163 755
US-A1- 2014 200 723  US-A1- 2015 081 124
US-A1- 2016 064 934  US-A1- 2017 187 186

**Description**

**DOMAINE TECHNIQUE DE L'INVENTION**

Le domaine technique de l'invention est celui de la gestion des systèmes d'énergie hybrides.
La présente invention concerne un procédé de gestion d'un système hybride et en particulier un procédé de gestion prenant en compte l'aspect potentiellement intermittent de la disponibilité d'un réseau électrique sur lequel est connecté le système hybride. La présente invention concerne également un dispositif mettant en oeuvre ledit procédé.

**ARRIERE-PLAN TECHNOLOGIQUE DE L'INVENTION**

Dans les régions avec une disponibilité du réseau électrique intermittente, les groupes électrogènes sont souvent utilisés grâce à leur facilité de mise en oeuvre et leur robustesse face aux conditions climatiques diverses. Cependant, le coût du carburant, les difficultés rencontrées pour son approvisionnement ainsi que les exigences croissantes concernant les émissions de $CO_2$ incitent à diminuer leur utilisation dans ces systèmes. Avec la baisse du coût de production des énergies renouvelables telles que le photovoltaïque et les avancées technologiques dans ce domaine, les systèmes hybrides renouvelable/groupes électrogènes sont de plus en plus déployés dans les régions en question.
Les sources d'énergie renouvelables variables telles que l'énergie photovoltaïque ou éolienne étant des sources intermittentes qui peuvent varier fortement, une réserve de puissance est nécessaire à tout moment afin d'assurer la stabilité du système complet et de palier aux brusques variations de la puissance en énergie renouvelable. Cette réserve est généralement assurée par le fonctionnement des groupes électrogènes qui sont activés pour assurer la stabilité du système complet mais opèrent la plupart du temps en dessous de leurs points de production optimaux. En effet, ils doivent être allumés et fonctionner à faible puissance pour pouvoir à n'importe quel instant fournir la puissance nécessaire pour palier à une chute de la production d'énergie renouvelable. La réserve du système complet est ainsi assurée par la puissance rapidement mobilisable que peuvent délivrer les groupes électrogènes allumés. Ce mode de fonctionnement permet de garantir la stabilité du système avec une gestion simple, mais il limite la quantité de l'énergie renouvelable utilisée dans le système et n'est pas optimal en termes de consommation de carburant.
La majorité des systèmes de gestion de systèmes hybrides commercialisés récemment se basent uniquement sur la régulation à la baisse de l'énergie, en particulier de l'énergie photovoltaïque. Ceci permet de limiter la variation de cette source intermittente et laisser en fonctionnement les groupes électrogènes à une puissance minimum afin qu'ils puissent réagir rapidement pour maintenir le système stable. Autrement dit, la production photovoltaïque sert de variable d'ajustement. Mais l'inconvénient de cette gestion est qu'elle encourage l'utilisation des groupes électrogènes (ces derniers devant rester allumés pour répondre rapidement à la demande) au détriment de la production photovoltaïque, entrainant une consommation de carburant qui pourrait être évitée.
Afin de réduire l'usage des groupes électrogènes, la collaboration SMA-Reuniwatt propose une solution pour systèmes *offgrid* (c'est-à-dire non connecté à un réseau électrique) promettant une diminution des coûts opérationnels (c'est-à-dire une réduction de l'utilisation des groupes électrogènes et donc de l'émission de gaz à effet de serre). La gestion d'énergie s'appuie sur l'utilisation des prévisions de production photovoltaïque à court termes pour réduire la puissance de réserve assurée par les groupes électrogènes. Le contrôleur du système hybride va recevoir l'information de l'arrivée des nuages (pour donner un exemple) associée à une chute de production photovoltaïque, l'activation ou la désactivation d'un ou plusieurs groupes électrogènes se faisant selon les besoins ainsi anticipés. La méthode proposée est cependant limitée à l'opération des systèmes hybrides comportant seulement deux types de production électrique : des groupes électrogènes et une production photovoltaïque.
Le document FR 3 045 194 A1 enseigne un procédé d'opération d'un système de production énergétique mixte, avec le dispositif associé pour la mise en oeuvre de ce procédé et le programme d'ordinateur adapté.
Il existe donc un besoin d'un procédé de gestion prenant en compte la connexion du système hybride à un réseau électrique et, éventuellement, la présence d'un moyen de stockage de l'énergie.

**RESUME DE L'INVENTION**

L'invention offre une solution au problème évoqué précédemment, en permettant une prise en compte, à travers le calcul d'une puissance de réserve $P_{res}$, de la disponibilité intermittente d'un réseau électrique et de la présence éventuelle d'un moyen de stockage.
L'invention est définie par les revendications indépendantes. Les modes particuliers de réalisation sont définis par les revendications dépendantes.
Un premier aspect de l'invention concerne un procédé de gestion d'un système hybride renouvelable/groupe électrogène, ledit système hybride comportant un moyen de production d'énergie renouvelable (par ex. un moyen de production photovoltaïque et/ou éolien) et une pluralité de groupes électrogènes, ledit système étant connecté à un réseau électrique à la disponibilité intermittente, la gestion du système se faisant en fonction d'une puissance de réserve notée $P_{res}$ prenant en compte ladite intermittence, ledit procédé comprenant :

- une étape de détermination d'une puissance de réserve comportant :

  ■ une sous étape de détermination d'une puissance de réserve de charge (ou de consommation) notée $P_{res}^{load}$ ;

  ■ une sous étape de détermination d'une puissance de réserve d'énergie renouvelable notée $P_{res}^{RE}$ ;

  ■ une sous étape de détermination d'une puissance de réserve du réseau électrique $P_{res}^{GRID}$ ;

  la puissance de réserve $P_{res}$ étant donnée par :

$$P_{res} = P_{res}^{load} + P_{res}^{RE} + P_{res}^{GRID}$$

- une étape de détermination des états des groupes électrogènes en fonction de la puissance de réserve $P_{res}$ précédemment déterminée.

On entend par détermination des états des groupes électrogènes le fait de déterminer combien de groupes électrogènes doivent être à l'état allumé afin de pouvoir répondre à la demande (incluant la puissance de réserve). En prenant en compte une puissance de réserve, et notamment une puissance de réserve du réseau électrique, le procédé selon l'invention permet de prendre en compte l'aspect intermittent de la disponibilité du réseau électrique dans la gestion du système hybride.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Dans un mode de réalisation, la puissance de réserve de charge $P_{res}^{load}$ est donnée par :

$$P_{res}^{load} = P_{prev}^{load}(h) - P_{load}(t-1)$$

où $P_{prev}^{load}$ est la puissance prévisionnelle de charge à l'horizon de temps $h$ et $P_{load}(t$ - $1)$ est la dernière valeur connue de la puissance de charge.

Dans un mode de réalisation, la puissance prévisionnelle de charge $P_{prev}^{load}$ est donnée par :

$$P_{prev}^{load} = \gamma \times P_{load}^{parf}(h)$$

où $P_{load}^{parf}(h)$ ($h$) est la prévision parfaite de la charge à l'horizon de temps $h$ et $\gamma$ un coefficient de pondération.
Ce mode de réalisation permet une évaluation optimale de la puissance de réserve $P_{res}$ nécessaire à une éventuelle variation de la charge. Cependant sa performance est dépendante de la précision de la prévision de consommation.

Dans un mode de réalisation, la puissance prévisionnelle de charge $P_{prev}^{load}$ est donnée par :

$$P_{prev}^{load} = \gamma \times \max_{h} P_{load}^{parf}$$

où $\max_{h} P_{load}^{parf}$ est la valeur maximale de la prévision parfaite de la charge sur l'horizon de temps $h$ et $\gamma$ un coefficient

de pondération.

Ce mode de réalisation permet de garder une marge de sécurité dans l'évaluation de la puissance de réserve $P_{res}$ nécessaire face à une éventuelle variation de la charge et ceci pendant l'horizon du temps h. Elle est donc moins optimale que l'option précédente pour un $\gamma$ donné.

Dans un mode de réalisation, la puissance prévisionnelle de charge $P_{prev}^{load}$ est donnée par :

$$P_{prev}^{load} = \gamma \times \underset{h}{\mathrm{mean}}\ P_{load}^{parf}$$

où $\underset{h}{\mathrm{mean}}\ P_{load}^{parf}$ est la valeur moyenne de la prévision parfaite de la charge sur l'horizon de temps $h$ et $\gamma$ un coefficient de pondération.

Ce mode de réalisation permet d'obtenir un compromis entre les deux modes de réalisation précédents en lissant la variation de charge sur l'horizon de temps considéré.

Dans un mode de réalisation, la puissance prévisionnelle de charge $P_{prev}^{load}$ est donnée par :

$$P_{prev}^{load} = \begin{cases} P_{max}^{maint} \ si\ P_{load}(t-1) < P_{maint} \\ P_{max}^{nomaint} \ si\ P_{load}(t-1) \geq P_{maint} \end{cases}$$

où $P_{load}(t\text{ - }1)$ est la dernière valeur connue de la puissance de charge $P_{load}$, $P_{maint}$ est une valeur seuil permettant de distinguer une phase de production d'une phase de maintenance, $P_{max}^{maint}$ est la valeur maximale de la charge durant la phase de maintenance et $P_{max}^{nomaint}$ est la valeur maximale de la charge durant la phase de production.

Ce mode de réalisation est particulièrement adapté lorsque le système hybride est destiné à alimenter un site industriel.

Dans un mode de réalisation, la puissance de réserve d'énergie renouvelable $P_{res}^{RE}$ est donnée par :

$$P_{res}^{RE} = -\left(P_{prev}^{RE}(h) - P_{RE}(t-1)\right)$$

où $P_{prev}^{RE}$ est la production d'énergie renouvelable prévue à l'horizon de temps $h$ et $P_{RE}(t\text{ - }1)$ est la dernière valeur connue de la production d'énergie renouvelable.

Dans un mode de réalisation, la production d'énergie renouvelable prévue $P_{prev}^{RE}(h)$ est donnée par :

$$P_{prev}^{RE}(h) = \delta \times P_{RE}^{MPPT}(h)$$

où $\delta$ est un coefficient et $P_{RE}^{MPPT}(h)$ est la prévision parfaite de production d'énergie renouvelable à l'horizon de temps $h$.

Ce mode de réalisation permet une évaluation optimale de la puissance de réserve nécessaire à une éventuelle variation de la production d'énergie renouvelable. Cependant sa performance est dépendante de la précision de la prévision de production d'énergie renouvelable.

Dans un mode de réalisation, la production d'énergie renouvelable prévue $P_{prev}^{RE}(h)$ est donnée par :

$$P_{prev}^{RE}(h) = \delta \times \min_{h} P_{RE}^{MPPT}(h)$$

où $\delta$ est un coefficient et $\min_{h} P_{RE}^{MPPT}(h)$ est la valeur minimale de la prévision parfaite de production d'énergie renouvelable à l'horizon de temps $h$.

Ce mode de réalisation permet de garder une marge de sécurité dans l'évaluation de la puissance de réserve nécessaire face à une éventuelle variation de la production d'énergie renouvelable et ceci pendant l'horizon de temps $h$. Elle est donc moins optimale en termes d'utilisation des groupes électrogènes comparée à l'option précédente pour un $\gamma$ donné.

Selon l'invention, la puissance de réserve du réseau électrique $P_{res}^{GRID}$ est donnée par :

$$P_{res}^{GRID} = -\left(P_{prev}^{GRID} - P_{GRID}(t-1)\right)$$

où $P_{prev}^{GRID}$ est la puissance prévisionnelle du réseau électrique, $P_{GRID}(t\text{-}1)$ est la dernière valeur connue de la puissance du réseau électrique.

Selon l'invention, la puissance prévisionnelle du réseau électrique est donnée par :

$$P_{prev}^{GRID} = GRID_{prev}^{avail} \times P_{GRID}(t-1)$$

où $P_{GRID}(t\text{-}1)$ est la dernière valeur connue de la puissance du réseau électrique et $GRID_{prev}^{avail}$ est une prévision de disponibilité du réseau électrique, ladite disponibilité étant donnée par :

$$GRID_{prev}^{avail} = \begin{cases} 0, P_{avail}(h) < P_{avail}^{thres} \\ GRID_{prev}^{avail}(h), P_{avail}(h) \geq P_{avail}^{thres} \end{cases}$$

où $GRID_{prev}^{avail}(h)$ est une prévision de disponibilité du réseau électrique à l'horizon de temps $h$, $P_{avail}(h)$ est la probabilité accordée à ladite prévision à l'horizon de temps $h$ et $P_{avail}^{thres}$ est un seuil de probabilité jugé acceptable.

Selon l'invention, il est possible de faire varier la puissance de réserve $P_{res}$ en fonction de la probabilité de disponibilité du réseau électrique.

Dans un mode de réalisation, le système hybride comprend un moyen de stockage et l'étape de détermination d'une puissance de réserve $P_{res}$ comprend une sous étape de détermination d'une puissance de réserve de stockage notée $P_{res}^{ESS}$, la puissance de réserve $P_{res}$ étant donnée par :

$$P_{res} = P_{res}^{load} + P_{res}^{RE} + P_{res}^{GRID} + P_{res}^{ESS}$$

Dans un mode de réalisation, la puissance de réserve de stockage $P_{res}^{ESS}$ est donnée par :

$$P_{res}^{ESS} = -\left(P_{prev}^{ESS}(h) - P_{ESS}(t-1)\right)$$

où $P_{prev}^{ESS}(h)$ est la puissance maximale que pourra fournir le moyen de stockage à l'horizon de temps $h$ et $P_{ESS}(t - 1)$ est la dernière valeur connue de la puissance de stockage.

Dans un mode de réalisation, la puissance maximale que pourra fournir le moyen de stockage à l'horizon de temps $h$ $P_{prev}^{ESS}(h)$ est donnée par :

$$P_{prev}^{ESS} = interp\left(SOE_{bktps}, P_{max}^{DCH}, SOE_{prev}\right)$$

où *interp* (*x, y, z*) est la fonction interpolation donnant la valeur *f(z)* correspondant à *z* suivant la fonction *y = f(x)*, $SOE_{bktps}$ est le vecteur de l'état d'énergie du moyen de stockage, $P_{max}^{DCH}$ est le vecteur de la puissance maximale de décharge du moyen de stockage (ces paramètres sont en général fournis par le fabricant du moyen de stockage) et $SOE_{prev}$ est l'état de d'énergie prévisionnel donnée par :

$$SOE_{prev} = SOE(t - 1) - P_{ESS}(t - 1) \times \frac{h}{E_{nom} \times 3600}$$

où $E_{nom}$ est la capacité nominale en énergie du moyen de stockage et *SOE(t - 1)* est la dernière valeur connue de l'état d'énergie du moyen de stockage.

Autrement dit, la puissance de stockage prévisionnelle $P_{prev}^{ESS}$ correspond à la puissance de décharge que pourra fournir le moyen de stockage à l'état d'énergie prévisionnel $SOE_{prev}$.

Ainsi, le procédé de gestion selon l'invention prend également en compte la présence d'un moyen de stockage dans le calcul de la puissance de réserve $P_{res}$.

Dans un mode de réalisation, l'étape de détermination des états des groupes électrogènes en fonction de la puissance de réserve $P_{res}$ comprend :

- une sous-étape de détermination d'une charge nette notée $NL_{start}^{GE}$ ;

- une sous-étape de détermination de l'état des groupes électrogènes à partir de la charge nette $NL_{start}^{GE}$.

Dans un mode de réalisation, la charge nette est donnée par l'expression suivante :

$$NL_{start}^{GE} = P_{load}(t - 1) - P_{prod}(t - 1) + P_{res}$$

où $P_{load}(t - 1)$ est la dernière puissance de charge (ou puissance consommée) connue (c'est-à-dire mesurée), $P_{prod}(t - 1)$ est la dernière puissance produite connue (c'est-à-dire mesurée) et $P_{res}$ est la puissance de réserve déterminée à l'étape précédente.

Un deuxième aspect de l'invention concerne un dispositif comprenant des moyens configurés pour mettre en oeuvre un procédé selon un premier aspect de l'invention.

Un troisième aspect de l'invention concerne un programme d'ordinateur comprenant des instructions qui, lorsque le programme est exécuté par un ordinateur, conduisent celui-ci à mettre en oeuvre un procédé selon un premier aspect de l'invention.

Un quatrième aspect de l'invention concerne un support de données lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

## BREVE DESCRIPTION DES FIGURES

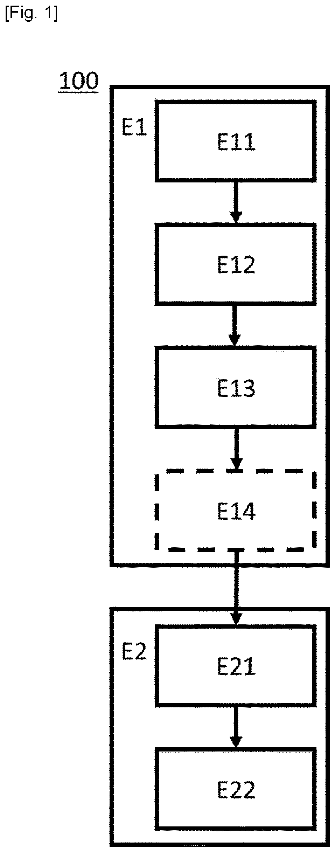

La [Figure 1] est présentée à titre indicatif et nullement limitatif de l'invention. Elle illustre un ordinogramme d'un procédé selon un premier aspect de l'invention.

## DESCRIPTION DETAILLEE

Dans la suite, la variable $X(t - 1)$ représentera la dernière valeur connue de la grandeur $X$. La dernière valeur connue peut être issue d'une mesure, d'un calcul (si la valeur en question peut être déterminée ainsi), ou par tout autre méthode permettant de déterminer ladite valeur.

Un premier aspect de l'invention illustré à la [Figure 1] concerne un procédé 100 de gestion d'un système hybride renouvelable/groupes électrogènes. Le système hybride géré par un procédé 100 selon l'invention comprend un moyen de production d'énergie renouvelable (par ex. un moyen de production photovoltaïque et/ou éolien) et une pluralité de groupes électrogènes (par ex. des groupes électrogènes diesels). En plus du dispositif de production, le système géré par le procédé 100 selon l'invention est connecté à un réseau électrique, la disponibilité de ce réseau électrique pouvant être intermittente. Autrement dit, comme nous le verrons dans la suite, le procédé 100 selon l'invention permet de gérer un système hybride connecté à un réseau électrique en prenant en compte l'aspect intermittent de ce réseau électrique. On entend par « aspect intermittent de la disponibilité du réseau électrique » le fait que le réseau électrique peut devenir indisponible ou redevenir disponible au cours du fonctionnement du système hybride. Pour cela, la gestion se fait en fonction d'une puissance de réserve prenant en compte cette intermittence.

Détermination de la puissance de réserve

Plus particulièrement, le procédé 100 selon l'invention comprend une étape E1 de détermination d'une puissance de réserve noté $P_{res}$ comportant :

- une sous étape E11 de détermination d'une puissance de réserve de charge (ou de consommation) notée $P_{res}^{load}$ ;

- une sous étape E12 de détermination d'une puissance de réserve d'énergie renouvelable notée $P_{res}^{RE}$ ;

- une sous étape E13 de détermination d'une puissance de réserve du réseau électrique $P_{res}^{GRID}$ ;

En outre, la puissance de réserve $P_{res}$ est donnée par l'expression suivante :

[Math. 1]

$$P_{res} = P_{res}^{load} + P_{res}^{RE} + P_{res}^{GRID}$$

Dans un mode de réalisation, le système hybride comprend un moyen de stockage (par ex. une pile combustible, un supercondensateur, une batterie, etc.) et l'étape E1 de détermination d'une puissance de réserve noté $P_{res}$ comporte une sous étape E14 de détermination d'une puissance de réserve de stockage notée $P_{res}^{ESS}$. Dans ce mode de réalisation, la puissance de réserve $P_{res}$ est donnée par l'expression suivante :

[Math. 2]

$$P_{res} = P_{res}^{load} + P_{res}^{RE} + P_{res}^{GRID} + P_{res}^{ESS}$$

La puissance de réserve ainsi déterminée permet notamment d'anticiper une baisse de la production d'énergie renouvelable tout en prenant en compte l'intermittence de la disponibilité du réseau électrique.

Prise en compte de la charge (ou consommation)

Dans le procédé 100 selon l'invention, la puissance de réserve de charge (ou de consommation) notée $P_{res}^{load}$ permet de prendre en compte une éventuelle augmentation (ou diminution) de la puissance électrique consommée.

Dans un mode de réalisation, la puissance de réserve de charge $P_{res}^{load}$ est déterminée à l'aide de l'expression suivante :

[Math. 3]

$$P_{res}^{load} = P_{prev}^{load}(h) - P_{load}(t-1)$$

où $P_{prev}^{load}(h)$ est la puissance prévisionnelle de charge à l'horizon de temps h et $P_{load}(t$ - 1) est la dernière valeur connue de la puissance de charge (de préférence, déterminée par une mesure).

Afin de déterminer la puissance prévisionnelle de charge à l'horizon de temps h, il est possible d'envisager plusieurs méthodes en fonction des considérations souhaitées.

Dans un mode de réalisation, lorsque l'on considère la prévision parfaite à l'horizon de temps h, alors la puissance prévisionnelle de charge à l'horizon de temps h est donnée par l'expression suivante :

[Math. 4]

$$P_{prev}^{load}(h) = \gamma \times P_{load}^{parf}(h)$$

où $P_{load}^{parf}(h)$ est la prévision parfaite de la charge (c'est-à-dire de la consommation) à l'horizon de temps h et $\gamma$ un coefficient de pondération permettant de prendre en compte les éventuelles erreurs de précision dans la prévision parfaite de la charge.

Dans un mode de réalisation alternatif, lorsque l'on souhaite prendre en compte le maximum de la prévision parfaite de charge sur l'horizon de temps h considéré, alors la puissance prévisionnelle de charge à l'horizon de temps h est donnée par l'expression suivante :

[Math. 5]

$$P_{prev}^{load} = \gamma \times \max_h P_{load}^{parf}$$

où $\max\limits_h P_{load}^{parf}$ est la valeur maximale que prend la charge sur l'horizon de temps h et $\gamma$ un coefficient de pondération permettant de prendre en compte les éventuelles erreurs de précision dans la prévision de la charge.

Dans un mode de réalisation alternatif, lorsque l'on souhaite prendre en compte la moyenne de la prévision parfaite de charge sur l'horizon de temps h considéré, alors la puissance prévisionnelle de charge à l'horizon de temps h est donnée par l'expression suivante :

[Math. 6]

$$P_{prev}^{load} = \gamma \times \operatorname*{mean}_h P_{load}^{parf}$$

où $\operatorname*{mean}\limits_h P_{load}^{parf}$ est la valeur moyenne que prend la charge sur l'horizon de temps h et $\gamma$ un coefficient de pondération. Là encore, le coefficient de pondération $\gamma$ permet de prendre en compte les éventuelles erreurs de précision.

Dans un mode de réalisation alternatif, lorsque l'on considère la consommation maximale suivant un seuil, alors la puissance prévisionnelle de charge à l'horizon de temps h est donnée par l'expression suivante :

[Math. 7]

$$P_{prev}^{load} = \begin{cases} P_{max}^{maint} \ si \ P_{load}(t-1) < P_{maint} \\ P_{max}^{nomaint} \ si \ P_{load}(t-1) \geq P_{maint} \end{cases}$$

où $P_{load}(t$ - $1)$ est la dernière valeur connue de la puissance de charge $P_{load}$ (de préférence, déterminée par une mesure),

$P_{maint}$ est une valeur seuil permettant de distinguer une phase de production d'une phase de maintenance, $P_{max}^{maint}$ est la valeur maximale de la charge durant la phase de maintenance et $P_{max}^{nomaint}$ est la valeur maximale de la charge durant la phase de production.

Ce mode de réalisation est particulièrement adapté à une installation industrielle pour laquelle il est possible d'identifier les phases de maintenance associées à une faible consommation électrique (et donc $P_{load}(t$ - $1) < P_{maint}$) et les phases de production associées à une forte consommation électrique (et donc $P_{load}(t$ - $1) \geq P_{maint}$). Dans ce cas-là, le seuil sera choisi de sorte à permettre de différentier deux types de phases et d'optimiser ainsi l'usage des groupes électrogènes. La valeur seuil $P_{maint}$ pourra être déterminée à partir d'un historique de la puissance consommée au cours du temps et/ou à partir de données techniques caractérisant la consommation de l'installation. On remarquera ici que le même principe peut être appliqué à toute installation pour laquelle il est possible d'identifier deux phases distinctes associées à deux consommations distinctes, comme par exemple un immeuble de bureau qui peut alterner entre une phase occupée (en général en journée) associée à une forte consommation et une phase vide (ou faiblement occupé - en général la nuit et le week-end) associée à une faible consommation.

Prise en compte de la production d'énergie renouvelable

Comme déjà mentionné, la puissance de réserve doit permettre d'anticiper les évolutions de la production d'énergie renouvelable, et en particulier la baisse de cette production. Pour cela, dans un mode de réalisation, la puissance de réserve d'énergie renouvelable $P_{res}^{RE}$ est donnée par l'expression suivante :

[Math. 8]

$$P_{res}^{RE} = -\left(P_{prev}^{RE}(h) - P_{RE}(t-1)\right)$$

où $P_{prev}^{RE}$ est la production d'énergie renouvelable prévue à l'horizon de temps $h$ et $P_{RE}(t$ - $1)$ est la dernière valeur connue de la production d'énergie renouvelable (de préférence, déterminée par une mesure).

De manière générale, la puissance prévisionnelle d'énergie renouvelable $P_{prev}^{RE}(h)$ est calculée à partir d'une prévision parfaite sur l'horizon de temps $h$ notée $P_{RE}^{MPPT}(h)$. Cette prévision parfaite peut par exemple être déterminée à l'aide de données météorologiques et/ou d'un modèle physique du moyen de production d'énergie renouvelable. On entend par prévision parfaite une prévision dont exactitude est présumée parfaite, c'est-à-dire que la puissance prédite est celle qui sera produite.

Plus particulièrement, dans un mode de réalisation, lorsque l'on souhaite considérer la production parfaite, alors la puissance prévisionnelle d'énergie renouvelable $P_{prev}^{RE}(h)$ est déterminée à l'aide de l'expression suivante :

[Math. 9]

$$P_{prev}^{RE}(h) = \delta \times P_{RE}^{MPPT}(h)$$

où $\delta$ est un coefficient permettant de prendre en compte les erreurs de prévision. Il est important de noter que ce coefficient peut être plus petit que un (lorsque la prédiction surestime la production) ou plus grand que un (lorsque la production sous-estime la production), mais il est toujours positif.

Dans un mode de réalisation alternatif, lorsque l'on souhaite prendre en compte le minimum de la prévision parfaite sur l'horizon de temps h, alors la puissance prévisionnelle d'énergie renouvelable $P_{prev}^{RE}(h)$ est déterminée à l'aide de l'expression suivante :

[Math. 10]

$$P_{prev}^{RE}(h) = \delta \times \min_h P_{RE}^{MPPT}(h)$$

où $\delta$ est un coefficient permettant de prendre en compte les erreurs de prévision et $\min_h P_{RE}^{MPPT}$ est la valeur minimale de la prévision parfaite de production à l'horizon de temps *h*.

Prise en compte de la production réseau et de son intermittence

Le système hybride géré par un procédé selon un premier aspect de l'invention est destiné à être connecté à un réseau électrique fournissant de la puissance électrique de manière potentiellement intermittente. Afin de prendre en compte cette intermittence, selon l'invention, la puissance de réserve du réseau électrique $P_{res}^{GRID}$ est donnée par l'expression suivante :

[Math. 11]

$$P_{res}^{GRID} = -\left(P_{prev}^{GRID} - P_{GRID}(t - 1)\right)$$

où $P_{prev}^{GRID}$ est la puissance prévisionnelle du réseau électrique, $P_{GRID}(t$ - 1) est la dernière valeur connue de la puissance fournie par le réseau électrique (de préférence, déterminée par une mesure). Autrement dit, le procédé selon un premier aspect de l'invention ne suppose pas que le réseau électrique est une source de puissance électrique dans laquelle il est possible de puiser sans restriction, mais prend au contraire en compte sont aspect intermittent.

Selon l'invention, la puissance prévisionnelle du réseau électrique est donnée par l'expression suivante :

[Math. 12]

$$P_{prev}^{GRID} = GRID_{prev}^{avail} \times P_{GRID}(t - 1)$$

où $P_{GRID}(t$ - 1) est la dernière valeur de la puissance fournie par le réseau électrique connue (de préférence, déterminée par une mesure) et $GRID_{prev}^{avail}$ est une prévision de disponibilité du réseau électrique, ladite disponibilité étant donnée par l'expression suivante :

[Math. 13]

$$GRID_{prev}^{avail} = \begin{cases} 0, P_{avail}(h) < P_{avail}^{thresh} \\ GRID_{prev}^{avail}(h), P_{avail}(h) \geq P_{avail}^{thresh} \end{cases}$$

où $GRID_{prev}^{avail}(h)$ est une prévision de disponibilité du réseau électrique à l'horizon de temps $h$, $P_{avail}(h)$ est la probabilité que l'on donne à cette prévision à l'horizon de temps $h$ et $P_{avail}^{thresh}$ est un seuil de probabilité jugé acceptable.

Le procédé selon l'invention est donc fonction d'une probabilité de disponibilité du réseau (par exemple calculée en fonction de l'historique dudit réseau et/ou fournie par l'exploitant du réseau) et d'une probabilité seuil au-delà de laquelle on considérera le réseau électrique comme présent (par exemple, en fonction du risque que l'exploitant est prêt à prendre quant à la bonne détermination de la puissance de réserve).

Prise en compte du stockage

La puissance de réserve doit également permettre d'anticiper ce que pourra fournir le moyen de stockage à la fin d'un horizon de temps donné h, cette capacité à fournir une puissance électrique pouvant aller à la baisse (car son état de charge diminue) ou bien à la hausse (car son état de charge augmente). Pour cela, dans un mode de réalisation, le système hybride comprend un moyen de stockage (par ex. une pile combustible, un supercondensateur, une batterie, etc.) et la puissance de réserve de stockage $P_{res}^{ESS}$ est donnée par :

[Math. 14]

$$P_{res}^{ESS} = -\left(P_{prev}^{ESS}(h) - P_{ESS}(t-1)\right)$$

où $P_{prev}^{ESS}(h)$ est la puissance maximale que pourra fournir le moyen de stockage à l'horizon de temps $h$ et $P_{ESS}(t-1)$ est la dernière valeur connue de la puissance de stockage (de préférence, déterminée par une mesure). De manière générale, lorsque l'on parle de puissance de stockage, on fait référence à la valeur maximale de la puissance que peut fournir un moyen de stockage considéré à un instant donné.

Dans un mode de réalisation, la puissance maximale que pourra fournir le moyen de stockage à l'horizon de temps h est calculée en supposant que la dernière valeur connue de la puissance de stockage $P_{ESS}(t-1)$ est appliquée pendant la durée de l'horizon de temps $h$. Autrement dit, dans un mode de réalisation, la puissance maximale que pourra fournir le moyen de stockage à l'horizon de temps $h$ $P_{prev}^{ESS}(h)$ est donnée par l'expression suivante :

[Math. 15]

$$P_{prev}^{ESS} = interp\left(SOE_{bktps}, P_{max}^{DCH}, SOE_{prev}\right)$$

où *interp* $(x, \tilde{y}, \tilde{z})$ est la fonction interpolation donnant la valeur $f(z)$ correspondant à z suivant la fonction $y = f(x)$ (fournie au moyen de deux vecteurs de valeurs $\tilde{x}$ et $\tilde{y}$), $SOE_{bktps}$ est le vecteur des valeurs de l'état d'énergie et $P_{max}^{DCH}$ est le vecteur de puissance maximale de décharge du moyen de stockage correspondant. En outre, $SOE_{prev}$ est l'état d'énergie prévisionnel donnée par :

[Math. 16]

$$SOE_{prev} = SOE(t-1) - P_{ESS}(t-1) \times \frac{h}{E_{nom} \times 3600}$$

où $E_{nom}$ est la capacité nominale du moyen de stockage et $SOE(t-1)$ est la dernière valeur connue de l'état d'énergie du moyen de stockage.

La valeur du vecteur des valeurs de l'état d'énergie $SOE_{bktps}$ et du vecteur de puissance maximale de décharge du moyen de stockage $P_{max}^{DCH}$ nécessaires à l'interpolation sont en général données par le constructeur ou le fournisseur du moyen de stockage.

Détermination des états des groupes électrogènes

Une fois que la puissance de réserve $P_{res}$ a été déterminée, il est possible de déterminer l'état des groupes électrogènes permettant d'obtenir la puissance de réserve nécessaire. Pour cela, le procédé 100 selon l'invention comprend une étape E2 de détermination des états des groupes électrogènes en fonction de la puissance de réserve $P_{res}$ précédemment déterminée.

Dans un mode de réalisation, cette étape E2 comprend une sous-étape E21 de détermination d'une charge nette notée $NL_{start}^{GE}$. Dans un mode de réalisation, cette charge nette $NL_{start}^{GE}$ est donnée par l'expression suivante :

[Math. 17]

$$NL_{start}^{GE} = P_{load}(t-1) - P_{prod}(t-1) + P_{res}$$

où $P_{load}(t-1)$ est la dernière puissance de charge (ou puissance consommée) connue (de préférence, déterminée à partir d'une mesure), $P_{prod}(t-1)$ est la dernière puissance produite connue (de préférence, déterminée à partir d'une mesure) et $P_{res}$ est la puissance de réserve déterminée à l'étape précédente.

Dans un mode de réalisation, cette charge nette est donnée par l'expression suivante :

[Math. 18]

$$NL_{start}^{GE} = P_{load}(t-1) - P_{PV}^{PMMT}(t-1) - P_{GRID}(t-1) - P_{ESS}^{ch\_dch} + P_{res}$$

où $P_{ESS}^{ch\_dch}$ est donnée par l'expression suivante :

[Math. 19]

$$P_{ESS}^{ch\_dch} = -\min\left(P_{ESS}^{max/dch}, SOE \times \frac{E_{nom} \times 3600}{TimeStep}\right)$$
$$\times (dch(SOE) \times Ind_{dch} + ch(SOE) \times Ind_{ch})$$

où $E_{nom}$ est la capacité nominale en énergie, $TimeStep$ est l'intervalle de temps séparant deux déterminations de la charge nette, $P_{ESS}^{max/dch}$ est la puissance que peut délivrer le moyen de stockage en décharge, $Ind_{dch}$ est un indicateur que vaut un (1) lorsque le moyen de stockage est en décharge et zéro (0) lorsqu'il est en charge, $Ind_{ch}$ est un indicateur que vaut 1 (un) lorsque le moyen de stockage est en charge et zéro (0) lorsqu'il est en décharge (autrement dit, $Indd_{ch}$ = $\overline{Ind_{ch}}$ ), et :

$$dch(SOE) = \begin{cases} 1 \; si \; SOE \geq 0.15 \\ 0 \; sinon \end{cases}$$

et

$$ch(SOE) = \begin{cases} 1 \; si \; SOE \geq 0.5 \\ 0 \; sinon \end{cases}$$

Autrement dit, la possibilité de décharge est prise en compte lorsque l'état d'énergie du moyen de stockage est supérieur ou égal à 15% ($SOE \geq 0.15$) et la possibilité de charge est prise en compte lorsque l'état d'énergie est supérieur ou égal à 50% ($SOE \geq 0.5$).

Dans un mode de réalisation, une fois la charge nette $NL_{start}^{GE}$ déterminée, le procédé 100 comprend en outre une sous-étape E22 de détermination de l'état des groupes électrogènes à partir de la charge nette $NL_{start}^{GE}$. Plus particulièrement, durant cette sous-étape E22, un nombre de groupes électrogènes $n$ est activé, $n$ étant choisi de sorte que $NL_{start}^{GE} > P_{max}^{GE(n-1)} * coef\_start$ et $NL_{start}^{GE} < P_{max}^{GE(n+1)} * coef\_stop$ où $P_{max}^{GEk}$ est la puissance maximale générée par k groupes électrogènes et les coefficients *coef_start* et *coef_stop* sont définis par l'opérateur afin de déterminer une plage de puissance de préférence des groupes. Cette méthode de gestion des groupes est courante dans les centrales thermiques et souvent appelée la gestion wattmétrique. Lesdits coefficients sont généralement compris entre 0.7 et 0.85 pour *coef_start* et entre 0.3 et 0.5 pour *coef_stop*. Autrement dit, durant la sous-étape E22 de détermination de l'état des groupes électrogènes, on détermine le nombre $n$ de groupes électrogènes nécessaires à la charge (ou la consommation) et à la prise en compte de la réserve calculée lors de l'étape E1 de détermination d'une puissance de réserve noté $P_{res}$. On notera que lorsque $NL_{start}^{GE} < 0$ , alors aucun groupe électrogène n'est activé.

Dans un mode de réalisation, il possible d'attribuer un ordre de priorité à chaque groupe électrogène, les groupes électrogènes étant alors activés par ordre de priorité.

Afin d'illustrer les avantages qu'il apporte, le procédé 100 selon l'invention va maintenant être illustré au travers d'un exemple dans lequel le système hybride comprend deux groupes électrogènes, un moyen de production d'énergie renouvelable sous la forme de panneaux photovoltaïques, une connexion à un réseau intermittent et un moyen de stockage. Afin de comparer la présente invention à l'état de la technique, trois simulations ont été effectuées sur ce système : une première simulation notée S1 simulant la mise en oeuvre d'un procédé selon l'état de la technique prenant en compte une puissance de réserve $P_{res}^{S1}$ ; une deuxième simulation notée S2 simulant la mise en oeuvre d'un procédé ne prenant pas en compte de puissance de réserve ; et une troisième simulation notée S3 simulant la mise en oeuvre d'un procédé 100 selon l'invention.

Afin de comparer les résultats, les indicateurs suivants sont utilisés :

- la quantité d'énergie non distribuée (Unmet Load en anglais) qui représente la stabilité de la fourniture ;

- la production des groupes électrogènes qui représente notamment l'émission de gaz à effet de serre ;

- la puissance prélevée sur le réseau qui représente l'optimisation de l'usage de la puissance disponible sur le réseau électrique (sachant qu'il est préférable de prélevée la puissance sur le réseau électrique que de faire usage des groupes électrogènes).

Les résultats de ces simulations (présentés sur le tableau 1) illustrent clairement les avantages du procédé 100 selon l'invention.

Par exemple, si l'on compare les simulations S1 et S2, l'absence de gestion de la puissance de réserve dans le cas de la simulation S2 diminue la production des groupes électrogènes (de 49,5% à 41,3%) et augmente la part de production réseau (de 32% à 40,1%) par rapport au cas de la simulation S1. Cependant, le manque de réserve induit des moments de déséquilibre consommation/production, visible au moyen de l'indicateur d'énergie non distribuée.

En revanche, si l'on compare la simulation S1 et la simulation S3, l'on constate que la gestion de la puissance de réserve par un procédé 100 selon l'invention permet à la fois d'augmenter la participation du réseau (40,4%), de diminuer la production des groupes électrogènes (40,9%), mais aussi de préserver l'équilibre consommation-production (l'énergie non distribuée est nulle).

[Tableau 1]

| Indicateurs | Simulation S1 | Simulation S2 | Simulation S3 |
|---|---|---|---|
| Energie non distribuée (kWh) | 0 | 9,06 | 0 |
| Production des groupes électrogènes (%) | 49,5 | 41,3 | 40,9 |
| Puissance prélevée sur le réseau (%) | 32 | 40,1 | 40,4 |

Un deuxième aspect de l'invention concerne un dispositif comportant les moyens configurés pour mettre en oeuvre un procédé 100 selon un premier aspect de l'invention. Dans un mode de réalisation, le dispositif comporte un moyen de calcul associé à une mémoire, ladite mémoire étant configurée pour stocker les instructions ainsi que les données nécessaires à la mise en oeuvre d'un procédé 100 selon l'invention. Dans un mode de réalisation, le dispositif comprend un ou plusieurs moyens de saisie permettant à un opérateur de saisir les données nécessaires à la mise en oeuvre d'un procédé selon un premier aspect de l'invention (par exemple, pour saisir des données telles que l'horizon de temps h considéré, les coefficients de pondération $\delta$ et $\gamma$ évoqués précédemment, etc.). Dans un mode de réalisation, le dispositif comporte également des moyens configurés pour envoyer des instructions aux groupes électrogènes en vue de leur activation ou désactivation et recevoir des données concernant l'état desdits groupes électrogènes. Dans un mode de réalisation, le dispositif comporte également des moyens configurés pour recevoir des données ou des instructions (par exemple des données de prévisions météorologiques pour la prédiction de la production d'énergie renouvelable, voire recevoir directement les données de prédiction de la production d'énergie renouvelable).

**Revendications**

1. Procédé (100) de gestion d'un système hybride renouvelable/groupes électrogènes, ledit système hybride comportant un moyen de production d'énergie renouvelable et une pluralité de groupes électrogènes, ledit système étant connecté à un réseau électrique à la disponibilité intermittente, la gestion du système se faisant en fonction d'une puissance de réserve noté $P_{res}$ prenant en compte ladite intermittence, ledit procédé comprenant :

   - une étape (E1) de détermination d'une puissance de réserve comportant :

     ▪ une sous étape (E11) de détermination d'une puissance de réserve de charge notée $P_{res}^{load}$ ;

     ▪ une sous étape (E12) de détermination d'une puissance de réserve d'énergie renouvelable notée $P_{res}^{RE}$ ;

     ▪ une sous étape (E13) de détermination d'une puissance de réserve du réseau électrique $P_{res}^{GRID}$ ;

   la puissance de réserve $P_{res}$ étant donnée par l'expression suivante :

$$P_{res} = P_{res}^{load} + P_{res}^{RE} + P_{res}^{GRID}$$

   - une étape (E2) de détermination des états des groupes électrogènes en fonction de la puissance de réserve $P_{res}$ précédemment déterminée;

   le procédé étant **caractérisé en ce que** la puissance de réserve du réseau électrique $P_{res}^{GRID}$ est donnée par l'expression suivante :

$$P_{res}^{GRID} = -\left(P_{prev}^{GRID} - P_{GRID}(t-1)\right)$$

où $P_{prev}^{GRID}$ est la puissance prévisionnelle du réseau électrique, $P_{GRID}(t\text{-}1)$ est la dernière valeur connue de la puissance disponible issue du réseau électrique et **en ce que** la puissance prévisionnelle du réseau électrique est donnée par l'expression suivante :

$$P_{prev}^{GRID} = GRID_{prev}^{avail} \times P_{GRID}(t-1)$$

où $P_{GRID}(t\text{-}1)$ est la dernière valeur connue de la puissance issue du réseau électrique et $GRID_{prev}^{avail}$ est une prévision de disponibilité du réseau électrique, ladite disponibilité étant donnée par :

$$GRID_{prev}^{avail} = \begin{cases} 0, P_{avail}(h) < P_{avail}^{thres} \\ GRID_{prev}^{avail}(h), P_{avail}(h) \geq P_{avail}^{thres} \end{cases}$$

où $GRID_{prev}^{avail}(h)$ est une prévision de disponibilité du réseau électrique à l'horizon de temps $h$, $P_{avail}(h)$ est la probabilité accordée à ladite prévision à l'horizon de temps $h$ et $P_{avail}^{thres}$ est un seuil de probabilité jugé acceptable.

2. Procédé (100) selon la revendication précédente dans lequel la puissance de réserve de charge $P_{res}^{load}$ est donnée par l'expression suivante :

$$P_{res}^{load} = P_{prev}^{load}(h) - P_{load}(t-1)$$

où $P_{prev}^{load}$ est la puissance prévisionnelle de charge à l'horizon de temps $h$ et $P_{load}(t\text{-}1)$ est la dernière valeur connue de la puissance de charge.

3. Procédé (100) selon la revendication précédente dans lequel la puissance prévisionnelle de charge $P_{prev}^{load}$ est donnée par l'expression suivante :

$$P_{prev}^{load} = \gamma \times P_{load}^{parf}(h)$$

où $P_{load}^{parf}(h)$ est la prévision parfaite de la charge à l'horizon de temps $h$ et $\gamma$ un coefficient de pondération.

4. Procédé (100) selon la revendication 2 dans lequel la puissance prévisionnelle de charge $P_{prev}^{load}$ est donnée par l'expression suivante :

$$P_{res}^{load} = \gamma \times \max_h P_{load}^{parf}$$

où $\max_h P_{load}^{parf}$ est la valeur maximale de la prévision parfaite de la charge sur l'horizon de temps $h$ et $\gamma$ un coefficient de pondération.

5. Procédé (100) selon la revendication 2 dans lequel la puissance prévisionnelle de charge $P_{prev}^{load}$ est donnée par l'expression suivante :

$$P_{prev}^{load} = \gamma \times \underset{h}{\text{mean}}\, P_{load}^{parf}$$

où $\underset{h}{\text{mean}}\, P_{load}^{parf}$ est la valeur moyenne de la prévision parfaite de la charge sur l'horizon de temps $h$ et $\gamma$ un coefficient de pondération.

6. Procédé (100) selon la revendication 2 dans lequel la puissance de prévisionnelle de charge $P_{prev}^{load}$ est donnée par l'expression suivante :

$$P_{prev}^{load} = \begin{cases} P_{max}^{maint} \; si \; P_{load}(t-1) < P_{maint} \\ P_{max}^{nomaint} \; si \; P_{load}(t-1) \geq P_{maint} \end{cases}$$

où $P_{load}(t-1)$ est la dernière valeur connue de la puissance de charge, $P_{maint}$ est une valeur seuil permettant de distinguer une phase de production d'une phase de maintenance, $P_{max}^{maint}$ est la valeur maximale de la charge durant la phase de maintenance et $P_{max}^{nomaint}$ est la valeur maximale de la charge durant la phase de production.

7. Procédé (100) selon l'une des revendications précédentes dans lequel la puissance de réserve d'énergie renouvelable $P_{res}^{RE}$ est donnée par l'expression suivante :

$$P_{res}^{RE} = -\left(P_{prev}^{RE}(h) - P_{RE}(t-1)\right)$$

où $P_{prev}^{RE}$ est la production d'énergie renouvelable prévue à l'horizon de temps $h$ et $P_{RE}(t-1)$ est la dernière valeur connue de la production d'énergie renouvelable.

8. Procédé (100) selon la revendication précédente dans lequel $P_{prev}^{RE}(h)$ est donnée par l'expression suivante :

$$P_{prev}^{RE}(h) = \delta \times P_{RE}^{MPPT}(h)$$

où $\delta$ est un coefficient et $P_{RE}^{MPPT}(h)$ est la prévision parfaite de production d'énergie renouvelable à l'horizon de temps $h$.

9. Procédé (100) selon la revendication 7 dans lequel $P_{prev}^{RE}(h)$ est donnée par l'expression suivante :

$$P_{prev}^{RE}(h) = \delta \times \underset{h}{\min}\, P_{RE}^{MPPT}(h)$$

où $\delta$ est un coefficient et $\underset{h}{\min}\, P_{RE}^{MPPT}(h)$ est la valeur minimale de la prévision $h$ parfaite de production d'énergie renouvelable à l'horizon de temps h.

10. Procédé (100) selon l'une des revendications précédentes dans lequel le système comprend un moyen de stockage et dans lequel l'étape (E1) de détermination d'une puissance de réserve $P_{res}$ comprend une sous étape (E14) de détermination d'une puissance de réserve de stockage notée $P_{res}^{ESS}$, la puissance de réserve $P_{res}$ étant donnée par l'expression suivante :

$$P_{res} = P_{res}^{load} + P_{res}^{RE} + P_{res}^{GRID} + P_{res}^{ESS}$$

**11.** Procédé (100) selon la revendication précédente dans lequel la puissance de réserve de stockage $P_{res}^{ESS}$ est donnée par l'expression suivante :

$$P_{res}^{ESS} = -(P_{prev}^{ESS}(h) - P_{ESS}(t-1))$$

où $P_{prev}^{ESS}(h)$ est la puissance maximale que pourra fournir le moyen de stockage à l'horizon de temps $h$ et $P_{ESS}(t-1)$ est la dernière valeur connue de la puissance de stockage.

**12.** Procédé (100) selon la revendication précédente dans lequel la puissance maximale que pourra fournir le moyen de stockage à l'horizon de temps $h$ $P_{prev}^{ESS}(h)$ est donnée par l'expression suivante :

$$P_{prev}^{ESS} = interp\left(SOE_{bktps}, P_{max}^{DCH}, SOE_{prev}\right)$$

où *interp* (*x, y, z*) est la fonction interpolation donnant la valeur *f(z)* correspondant à *z* suivant la fonction *y = f (x)*, $SOE_{bktps}$ est le vecteur des valeurs de l'état d'énergie du moyen de stockage, $P_{max}^{DCH}$ est le vecteur des valeurs de la puissance maximale de décharge du moyen de stockage et $SOE_{prev}$ est l'état d'énergie prévisionnel donnée par l'expression suivante :

$$SOE_{prev} = SOE(t-1) - P_{ESS}(t-1) \times \frac{h}{E_{nom} \times 3600}$$

où $E_{nom}$ est la capacité en énergie nominale du moyen de stockage et *SOE(t - 1)* est la dernière valeur connue de l'état d'énergie du moyen de stockage.

**13.** Procédé (100) selon l'une des revendications précédentes dans lequel étape (E2) de détermination des états des groupes électrogènes en fonction de la puissance de réserve $P_{res}$ comprend :

- une sous-étape (E21) de détermination d'une charge nette notée $NL_{start}^{GE}$ ;
- une sous-étape (E22) de détermination de l'état des groupes électrogène à partir de la charge nette $NL_{start}^{GE}$.

**14.** Procédé (100) selon la revendication précédente dans lequel la charge nette est donnée par l'expression suivante :

$$NL_{start}^{GE} = P_{load}(t-1) - P_{prod}(t-1) + P_{res}$$

où $P_{load}(t-1)$ est la dernière puissance de charge (ou puissance consommée) connue (c'est-à-dire mesurée), $P_{prod}(t-1)$ est la dernière puissance produite connue (c'est-à-dire mesurée) et $P_{res}$ est la puissance de réserve déterminée à l'étape précédente.

**15.** Dispositif comprenant les moyens configurés pour mettre en oeuvre un procédé (100) selon l'une des revendications précédentes.

**16.** Programme d'ordinateur comprenant des instructions qui, lorsque le programme est exécuté par un ordinateur, conduisent celui-ci à mettre en oeuvre un procédé (100) selon l'une des revendications 1 à 14.

17. Support de données lisible par ordinateur, sur lequel est enregistré le programme d'ordinateur selon la revendication précédente.

**Patentansprüche**

1. Verfahren (100) zur Verwaltung eines Hybridsystems für erneuerbare Energien und Stromerzeugungsaggregate, wobei das Hybridsystem ein Mittel zur Erzeugung erneuerbarer Energie und eine Vielzahl von Stromerzeugungsaggregaten umfasst und das System an ein Stromnetz mit intermittierender Verfügbarkeit angeschlossen ist und die Verwaltung des Systems in Abhängigkeit von einer Reserveleistung erfolgt, die als $P_{res}$ die Intermittenz berücksichtigt, wobei das Verfahren umfasst:

   - einen Schritt (E1) zur Bestimmung einer Reserveleistung, der Folgendes umfasst:

     ▪ einen Unterschritt (E11) zur Bestimmung einer Ladereserveleistung, die mit $P_{res}^{load}$ bezeichnet wird;

     ▪ einen Unterschritt (E12) zur Bestimmung einer Reserveleistung für erneuerbare Energie, die mit $P_{res}^{lRE}$ bezeichnet wird;

     ▪ einen Unterschritt (E13) zur Bestimmung einer Reserveleistung des Stromnetzes $P_{res}^{GRID}$ ;

   wobei die Reserveleistung $P_{res}$ durch folgende Formulierung gegeben ist:

   $$P_{res} = P_{res}^{load} + P_{res}^{RE} + P_{res}^{GRID}$$

   - einen Schritt (E2) zur Bestimmung der Zustände der Stromerzeugungsaggregate in Abhängigkeit von der zuvor bestimmten Reserveleistung $P_{res}$ ;

   wobei das Verfahren **dadurch gekennzeichnet ist, dass** die Reserveleistung des Stromnetzes $P_{res}^{GRID}$ durch folgende Formulierung gegeben ist:

   $$P_{res}^{GRID} = -\left(P_{prev}^{GRID} - P_{GRID}(t-1)\right)$$

   wobei $P_{prev}^{GRID}$ die prognostizierte Leistung des Stromnetzes ist, $P_{GRID}(t\text{-}1)$ der letzte bekannte Wert der verfügbaren Leistung aus dem Stromnetz ist und dadurch, dass die prognostizierte Leistung des Stromnetzes durch folgende Formulierung gegeben ist:

   $$P_{prev}^{GRID} = GRID_{prev}^{avail} \times P_{GRID}(t-1)$$

   wobei $P_{GRID}(t\text{-}1)$ der letzte bekannte Wert der Leistung aus dem Stromnetz und $GRID_{prev}^{avail}$ eine Prognose der Verfügbarkeit des Stromnetzes ist,
   wobei diese Verfügbarkeit gegeben ist durch:

   $$GRID_{prev}^{avail} = \begin{cases} 0, P_{avail}(h) < P_{avail}^{thres} \\ GRID_{prev}^{avail}(h), P_{avail}(h) \geq P_{avail}^{thres} \end{cases}$$

   wobei $GRID_{prev}^{avail}(h)$ eine Prognose der Verfügbarkeit des Stromnetzes zum Zeithorizont $h$ ist und $P_{avail}(h)$ die Wahrscheinlichkeit ist, die der Prognose für den Zeithorizont $h$ eingeräumt wird und $P_{avail}^{thres}$ ein Wahrscheinlichkeitsschwellenwert ist, der als akzeptabel erachtet wird.

**2.**

Verfahren (100) nach dem vorhergehenden Anspruch, bei dem die Ladereserveleistung $P_{res}^{load}$ durch die folgende Formulierung gegeben ist:

$$P_{res}^{load} = P_{prev}^{load}(h) - P_{load}(t - 1)$$

wobei $P_{prev}^{load}$ die prognostizierte Ladeleistung zum Zeithorizont $h$ ist und $P_{load}(t - 1)$ der letzte bekannte Wert der Ladeleistung ist.

**3.** Verfahren (100) nach dem vorhergehenden Anspruch, wobei die prognostizierte Ladeleistung $P_{prev}^{load}$ durch folgende Formulierung gegeben ist:

$$P_{prev}^{load} = \gamma \times P_{load}^{parf}(h)$$

wobei $P_{load}^{parf}(h)$ die perfekte Vorhersage der Ladung zum Zeithorizont $h$ ist und $\gamma$ ein Gewichtungsfaktor.

**4.** Verfahren (100) nach Anspruch 2, bei dem die prognostizierte Ladeleistung $P_{prev}^{load}$ durch folgende Formulierung gegeben ist:

$$P_{res}^{load} = \gamma \times \max_{h} P_{load}^{parf}$$

wobei $\max_{h} P_{load}^{parf}$ der Maximalwert der perfekt prognostizierten Ladung zum Zeithorizont $h$ ist und $\gamma$ ein Gewichtungsfaktor.

**5.** Verfahren (100) nach Anspruch 2, bei dem die prognostizierte Ladeleistung $P_{prev}^{load}$ durch folgende Formulierung gegeben ist:

$$P_{prev}^{load} = \gamma \times \operatorname*{mean}_{h} P_{load}^{parf}$$

wobei $\operatorname*{mean}_{h} P_{load}^{parf}$ der Durchschnittswert der perfekt prognostizierten Ladung zum Zeithorizont $h$ ist und $\gamma$ ein Gewichtungsfaktor.

**6.** Verfahren (100) nach Anspruch 2, bei dem die prognostizierte Ladeleistung $P_{prev}^{load}$ durch folgende Formulierung gegeben ist:

$$P_{prev}^{load} = \begin{cases} P_{max}^{maint} \ si \ P_{load}(t - 1) < P_{maint} \\ P_{max}^{nomaint} \ si \ P_{load}(t - 1) \geq P_{maint} \end{cases}$$

wobei $P_{load}(t - 1)$ der letzte bekannte Wert der Ladeleistung ist, $P_{maint}$ ein Schwellenwert ist, mit dem eine Produktionsphase von einer Wartungsphase unterschieden werden kann, $P_{max}^{maint}$ der Maximalwert der Ladung während der Wartungsphase ist und $P_{max}^{nomaint}$ der Maximalwert der Ladung während der Produktionsphase ist.

**7.** Verfahren (100) nach einem der vorhergehenden Ansprüche, bei dem die Reserveleistung aus erneuerbarer Energie $P_{res}^{RE}$ durch folgende Formulierung gegeben ist:

$$P_{res}^{RE} = -\left(P_{prev}^{RE}(h) - P_{RE}(t-1)\right)$$

wobei $P_{prev}^{RE}$ die erwartete Produktion erneuerbarer Energie zum Zeithorizont $h$ ist und $P_{RE}(t$-$1)$ der letzte bekannte Wert der Produktion erneuerbarer Energie ist.

**8.** Verfahren (100) nach dem vorhergehenden Anspruch, bei dem $P_{prev}^{RE}(h)$ durch folgende Formulierung gegeben ist:

$$P_{prev}^{RE}(h) = \delta \times P_{RE}^{MPPT}(h)$$

wobei $\delta$ ein Koeffizient ist und $P_{RE}^{MPPT}(h)$ die perfekte Prognose der Produktion erneuerbarer Energie zum Zeithorizont $h$ ist.

**9.** Verfahren (100) nach Anspruch 7, bei dem $P_{prev}^{RE}(h)$ durch folgende Formulierung gegeben ist:

$$P_{prev}^{RE}(h) = \delta \times \min_h P_{RE}^{MPPT}(h)$$

wobei $\delta$ ein Koeffizient ist und $\min_h P_{RE}^{MPPT}(h)$ der Mindestwert der perfekten Prognose für die Erzeugung erneuerbarer Energie zum Zeithorizont h ist.

**10.** Verfahren (100) nach einem der vorhergehenden Ansprüche, bei dem das System ein Speichermittel umfasst und bei dem der Schritt (E1) des Bestimmens einer Reserveleistung $P_{res}$ einen Unterschritt (E14) zum Bestimmen einer Speicherreserveleistung umfasst, die mit $P_{res}^{ESS}$ bezeichnet wird, wobei die Reserveleistung $P_{res}$ durch folgende Formulierung gegeben ist:

$$P_{res} = P_{res}^{load} + P_{res}^{RE} + P_{res}^{GRID} + P_{res}^{ESS}$$

**11.** Verfahren (100) nach dem vorhergehenden Anspruch, bei dem die Speicherreserveleistung $P_{res}^{ESS}$ durch folgende Formulierung gegeben ist:

$$P_{res}^{ESS} = -(P_{prev}^{ESS}(h) - P_{ESS}(t-1))$$

wobei $P_{prev}^{ESS}(h)$ die maximale Leistung ist, die das Speichermittel zum Zeithorizont $h$ liefern kann und $P_{ESS}(t$-$1)$ der letzte bekannte Wert der Speicherleistung ist.

**12.** Verfahren (100) nach dem vorhergehenden Anspruch, bei dem die maximale Leistung $P_{prev}^{ESS}(h)$ die das Spei-

chermittel zum Zeithorizont *h* liefern kann, durch folgende Formulierung gegeben ist:

$$P_{prev}^{ESS} = interp\left(SOE_{bktps}, P_{max}^{DCH}, SOE_{prev}\right)$$

wobei *interp(x, y, z)* die Interpolationsfunktion ist, die den *z* entsprechenden Wert *f(z)* gemäß der Funktion *y = f(x)* ergibt und wobei $SOE_{bktps}$ der Vektor der Werte für den Energiezustand des Speichermittels ist und wobei $P_{max}^{DCH}$ der Vektor der Werte der maximalen Entladeleistung des Speichermittels ist und $SOE_{prev}$ der prognostizierte Energiezustand ist, der durch folgende Formulierung gegeben ist:

$$SOE_{prev} = SOE(t-1) - P_{ESS}(t-1) \times \frac{h}{E_{nom} \times 3600}$$

wobei $E_{nom}$ die nominale Energiekapazität des Speichermittels ist und *SOE(t - 1)* der letzte bekannte Wert des Energiezustands des Speichermittels ist.

13. Verfahren (100) nach einem der vorhergehenden Ansprüche, bei dem der Schritt (E2) zur Bestimmung der Zustände der Stromerzeugungsaggregate in Abhängigkeit von der Reserveleistung $P_{res}$ umfasst:

- einen Unterschritt (E21) zur Bestimmung einer reinen Ladung, die mit $NL_{start}^{GE}$ bezeichnet wird;
- einen Unterschritt (E22) zur Bestimmung des Zustands der Stromerzeugungsaggregate anhand der reinen Ladung $NL_{start}^{GE}$.

14. Verfahren (100) nach dem vorhergehenden Anspruch, bei dem die reine Ladung durch folgende Formulierung gegeben ist:

$$NL_{start}^{GE} = P_{load}(t-1) - P_{prod}(t-1) + P_{res}$$

wobei $P_{load}(t - 1)$ die zuletzt bekannte Ladeleistung (oder verbrauchte Leistung) (d. h. gemessene Leistung) ist, $P_{prod}(t - 1)$ die zuletzt bekannte (d. h. gemessene) erzeugte Leistung ist und $P_{res}$ die im vorherigen Schritt ermittelte Reserveleistung ist.

15. Vorrichtung mit Mitteln, die so konfiguriert sind, dass sie ein Verfahren (100) nach einem der vorhergehenden Ansprüche ausführen.

16. Computerprogramm mit Anweisungen, die, wenn das Programm von einem Computer ausgeführt wird, diesen dazu veranlassen, ein Verfahren (100) nach einem der Ansprüche 1 bis 14 auszuführen.

17. Computerlesbarer Datenträger, auf dem das Computerprogramm nach dem vorhergehenden Anspruch gespeichert ist.

**Claims**

1. A method (100) for managing a hybrid renewable energy/generator set system, said hybrid system including a renewable energy production means and a plurality of generator sets, said system being connected to an electricity grid with intermittent availability, the system being managed as a function of a reserve power denoted as $P_{res}$ taking account of said intermittence, said method comprising:

- a step (E1) of determining a reserve power including:

  - a sub-step (E11) of determining a load reserve power denoted as $P_{res}^{load}$

■ a sub-step (E12) of determining a renewable energy reserve power denoted as $P_{res}^{lRE}$ ;

■ a sub-step (E13) of determining an electricity grid reserve power $P_{res}^{GRID}$ ;

the reserve power $P_{res}$ is given by the following expression:

$$P_{res} = P_{res}^{load} + P_{res}^{RE} + P_{res}^{GRID}$$

- a step (E2) of determining the states of the generator sets as a function of the reserve power $P_{res}$ previously determined;

the method being **characterised in that** the electricity grid reserve power $P_{res}^{GRID}$ is given by the following expression:

$$P_{res}^{GRID} = -\left( P_{prev}^{GRID} - P_{GRID}(t-1) \right)$$

where $P_{prev}^{GRID}$ is the predicted power of the electricity grid, $P_{GRID}(t\text{-}1)$ is the last known value of the power available from the electricity grid and that the predicted power of the electricity grid is given by the following expression:

$$P_{prev}^{GRID} = GRID_{prev}^{avail} \times P_{GRID}(t-1)$$

where $P_{GRID}(t\text{-}1)$ is the last known value of the power from the electricity grid $GRID_{prev}^{avail}$ is an availability prediction of the electricity grid,
said availability being given by:

$$GRID_{prev}^{avail} = \begin{cases} 0, P_{avail}(h) < P_{avail}^{thres} \\ GRID_{prev}^{avail}(h), P_{avail}(h) \geq P_{avail}^{thres} \end{cases}$$

where $GRID_{prev}^{avail}(h)$ is an availability prediction of the electricity grid at the time horizon $h$, $P_{avail}(h)$ is the probability granted to said prediction at the time horizon $h$ and $P_{avail}^{thres}$ is a probability threshold deemed acceptable.

2. The method (100) according to the preceding claim, wherein the load reserve power $P_{res}^{load}$ is given by the following expression:

$$P_{res}^{load} = P_{prev}^{load}(h) - P_{load}(t-1)$$

where $P_{prev}^{load}$ is the predicted load power at the time horizon $h$ and $P_{load}(t\text{-}1)$ is the last known value of the load power.

3. The method (100) according to the preceding claim, wherein the predicted load power $P_{prev}^{load}$ is given by the following expression:

$$P_{prev}^{load} = \gamma \times P_{load}^{parf}(h)$$

where $P_{load(h)}^{parf}$ is the perfect prediction of the load at the time horizon $h$ and $\gamma$ a weighting coefficient.

4. The method (100) according to claim 2, wherein the predicted load power $P_{prev}^{load}$ is given by the following expression:

$$P_{res}^{load} = \gamma \times \max_{h} P_{load}^{parf}$$

where $\max_{h} P_{load}^{parf}$ is the maximum value of the perfect prediction of the load over the time horizon h and $\gamma$ a weighting coefficient.

5. The method (100) according to claim 2, wherein the predicted load power $P_{prev}^{load}$ is given by the following expression:

$$P_{prev}^{load} = \gamma \times \operatorname*{mean}_{h} P_{load}^{parf}$$

here $\operatorname{mean}_{h} P_{load}^{parf}$ is the mean value of the perfect prediction of the load over the time horizon $h$ and $\gamma$ a weighting coefficient.

6. The method (100) according to claim 2, wherein the predicted load power $P_{prev}^{load}$ is given by the following expression:

$$P_{prev}^{load} = \begin{cases} P_{max}^{maint} \ si \ P_{load}(t-1) < P_{maint} \\ P_{max}^{nomaint} \ si \ P_{load}(t-1) \geq P_{maint} \end{cases}$$

where $P_{load}(t-1)$ is the last known value of the load power, $P_{maint}$ is a threshold value used to distinguish a production phase from a maintenance phase, $P_{max}^{maint}$ is the maximum value of the load during the maintenance phase and $P_{max}^{nomaint}$ is the maximum value of the load during the production phase.

7. The method (100) according to one of the preceding claims, wherein the renewable energy reserve power $P_{res}^{RE}$ is given by the following expression:

$$P_{res}^{RE} = -\left(P_{prev}^{RE}(h) - P_{RE}(t-1)\right)$$

where $P_{prev}^{RE}$ is the renewable energy production forecast at the time horizon $h$ and $P_{RE}(t-1)$ is the last known value of renewable energy production.

8. The method (100) according to the preceding claim, wherein $P_{prev}^{RE}(h)$ is given by the following expression:

$$P_{prev}^{RE}(h) = \delta \times P_{RE}^{MPPT}(h)$$

where $\delta$ is a coefficient and $P_{RE}^{MPPT}(h)$ is the perfect prediction of renewable energy production at the time horizon $h$.

9. The method (100) according to claim 7, wherein $P_{prev}^{RE}(h)$ is given by the following expression:

$$P_{prev}^{RE}(h) = \delta \times \min_{h} P_{RE}^{MPPT}(h)$$

where $\delta$ is a coefficient and $\underset{h}{min P_{RE}^{MPPT}(h)}$ is the minimum value of the perfect prediction of renewable energy production at the time horizon $h$.

10. The method (100) according to one of the preceding claims, wherein the system comprises a storage means and wherein the step (E1) of determining a reserve power $P_{res}$ comprises a sub-step (E14) of determining a storage reserve power denoted as $P_{res}^{ESS}$, the reserve power $P_{res}$ being given by the following expression:

$$P_{res} = P_{res}^{load} + P_{res}^{RE} + P_{res}^{GRID} + P_{res}^{ESS}$$

11. The method (100) according to the preceding claim, wherein the storage reserve power $P_{res}^{ESS}$ is given by the following expression:

$$P_{res}^{ESS} = -(P_{prev}^{ESS}(h) - P_{ESS}(t-1))$$

where $P_{prev}^{ESS}(h)$ is the maximum power that the storage means will be able to supply at the time horizon $h$ and $P_{ESS}(t-1)$ is the last known value of the storage power.

12. The method (100) according to the preceding claim, wherein the maximum power that the storage means will be able to supply at the time horizon $h$ $P_{prev}^{ESS}(h)$ is given by the following expression:

$$P_{prev}^{ESS} = interp\big(SOE_{bktps}, P_{max}^{DCH}, SOE_{prev}\big)$$

where $interp(x, y, z)$ is the interpolation function giving the value $f(z)$ corresponding to $z$ according to the function $y = f(x)$, $SOE_{bktps}$ is the vector of values of the state of energy of the storage means, $P_{max}^{DCH}$ is the vector of values of the maximum discharge power of the storage means and $SOE_{prev}$ is the predicted state of energy given by the following expression:

$$SOE_{prev} = SOE(t-1) - P_{ESS}(t-1) \times \frac{h}{E_{nom} \times 3600}$$

where $E_{nom}$ is the nominal energy capacity of the storage means and $SOE(t-1)$ is the last known value of the state of energy of the storage means.

13. The method (100) according to one of the preceding claims, wherein the step (E2) of determining the states of the generator sets as a function of the reserve power $P_{res}$ comprises:

    - a sub-step (E21) of determining a net load, denoted as $NL_{start}^{GE}$ ;

- a sub-step (E22) of determining the state of the generator sets from the net load $NL_{start}^{GE}$.

14. The method (100) according to the preceding claim, wherein the net load is given by the following expression:

$$NL_{start}^{GE} = P_{load}(t-1) - P_{prod}(t-1) + P_{res}$$

where $P_{load}(t-1)$ is the last known (that is, measured) load power (or power consumed), $P_{prod}(t-1)$ is the last known (that is, measured) generated power and $P_{res}$ is the reserve power determined in the preceding step.

15. A device comprising means configured to implement a method (100) according to one of the preceding claims.

16. A computer program comprising instructions which, when the program is executed by a computer, cause the same to implement a method (100) according to one of claims 1 to 14.

17. A computer-readable data medium on which the computer program according to the preceding claim is recorded.

[Fig. 1]

**EP 4 026 217 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3045194 A1